# EUROPÄISCHE PATENTSCHRIFT

(11) **EP 3 484 250 B1**
(45) Veröffentlichungstag und Bekanntmachung des Hinweises auf die Patenterteilung: **21.10.2020**
(21) Anmeldenummer: 18205374.4
(22) Anmeldetag: 09.11.2018
(51) Int. Cl.: H05B 47/185

(54) **VERFAHREN, ARBEITSBELEUCHTUNG UND ARBEITSMASCHINE ZUR LICHTEINSTELLUNG VON LEUCHTMITTELN**
METHOD, TASK LIGHT AND WORK MACHINE FOR CONFIGURING LIGHTS
PROCÉDÉ, ÉCLAIRAGE DE TRAVAIL ET MACHINE DE TRAVAIL DESTINÉE AU RÉGLAGE DES MOYENS D'ÉCLAIRAGE

(30) Priorität: 10.11.2017 DE 102017220014
(43) Veröffentlichungstag der Anmeldung: 15.05.2019
(73) Patentinhaber: HELLA GmbH & Co. KGaA, 59552 Lippstadt (DE)
(72) Erfinder: HINGEL, Andreas, 2431 Enzersdorf an der Fischa (AT); JANDRISITS, Christoph, 7534 Olbendorf (AT)
(74) Vertreter: Patentanwälte Bals & Vogel

(56) Entgegenhaltungen:
- DE-A1-102010 030 520
- US-A1- 2016 029 460

## Beschreibung

Die vorliegende Erfindung betrifft ein Verfahren zur Lichteinstellung von Leuchtmitteln einer Arbeitsbeleuchtung einer Arbeitsmaschine mittels einer Kontrolleinheit und wenigstens einem Signalgeber, wobei die Kontrolleinheit mit den Leuchtmitteln sowie dem wenigstens einen Signalgeber durch Signalleitungen in Signalverbindung steht.

Im Stand der Technik sind verschiedene Systeme zur Lichteinstellung von Leuchtmitteln einer Arbeitsbeleuchtung einer Arbeitsmaschine bekannt. Beispielsweise sind sensorbasierte Systeme bekannt, bei welchen Leuchtmittel unter Verwendung von Steuersignalen von verschiedenen Sensoren wie Lichtsensoren, Bewegungssensoren und/oder Objekterkennungssensoren eingestellt werden. Zur Koordinierung der Lichteinstellung kann ein BUS-System verwendet werden. Hierfür ist es erforderlich, neben den bestehenden Signalleitungen des Kabelbaums der Arbeitsmaschine noch weitere, BUS-spezifische Leitungen im Kabelbaum der Arbeitsmaschine zu verlegen. Dies ist mit entsprechenden Kosten verbunden und auch nicht bei jedem Lichtsystem ohne weiteres möglich. Eine weitere Möglichkeit zur Koordinierung der Lichteinstellung bieten kabellose Ergänzungssysteme. Diese sind jedoch störanfällig gegenüber externen Signalen, benötigen in der Regel eine eigene Stromversorgung und sind ebenso mit einem zusätzlichen Kostenaufwand verbunden. Gattungsgemäße Lichtsysteme sind ferner aus der DE 10 2010 030 520 A1 sowie der US 2016/0029460 A1 bekannt.

Aufgabe der vorliegenden Erfindung ist es, der voranstehend beschriebenen Problematik zumindest teilweise Rechnung zu tragen. Insbesondere ist es Aufgabe der vorliegenden Erfindung, ein Verfahren, eine Arbeitsbeleuchtung für eine Arbeitsmaschine sowie eine Arbeitsmaschine mit der Arbeitsbeleuchtung mit einer kostengünstigen und zuverlässig funktionierenden Lichteinstellung für Leuchtmittel zu schaffen.

Die voranstehende Aufgabe wird durch die Patentansprüche gelöst. Insbesondere wird die voranstehende Aufgabe durch die Arbeitsbeleuchtung gemäß Anspruch 1 sowie die Arbeitsmaschine gemäß Anspruch 4 gelöst. Weitere Vorteile der Erfindung ergeben sich aus den Unteransprüchen, der Beschreibung und den Zeichnungen. Dabei gelten Merkmale und Details, die im Zusammenhang mit der Arbeitsbeleuchtung beschrieben sind, selbstverständlich auch im Zusammenhang mit der erfindungsgemäßen Arbeitsmaschine und jeweils umgekehrt, sodass bezüglich der Offenbarung zu den einzelnen Erfindungsaspekten stets wechselseitig Bezug genommen wird bzw. werden kann.

Gemäß einem ersten Aspekt der vorliegenden Erfindung wird eine Arbeitsbeleuchtung für eine Arbeitsmaschine mit wenigstens einem Leuchtmittel, wenigstens einem Signalgeber für das wenigstens eine Leuchtmittel, und einer Kontrolleinheit, die mit dem wenigstens einen Leuchtmittel sowie dem wenigstens einen Signalgeber durch Signalleitungen in Signalverbindung steht, zur Verfügung gestellt. Die Kontrolleinheit ist konfiguriert und ausgestaltet, die Lichteinstellung des wenigstens einen Leuchtmittels anhand einer Modulation einer Spannungsversorgung des wenigstens einen Leuchtmittels und/oder des wenigstens einen Signalgebers über die Signalleitungen durch die Kontrolleinheit durchzuführen. Die Arbeitsbeleuchtung kann in Form eines PLC-Lichtnetzwerkes ausgestaltet sein. Bei der Arbeitsbeleuchtung gemäß der vorliegenden Erfindung weist die Kontrolleinheit als Schnittstelle für das wenigstens eine Leuchtmittel sowie den wenigstens einen Signalgeber eine UART-zu-PLC-Schaltung auf. Diese hat sich bei umfangreichen Versuchen im Rahmen der vorliegenden Erfindung als besonders zuverlässig und effizient erwiesen.

Unter einer UART-(Universal Asynchronous Receiver Transmitter)-Schaltung kann eine elektronische Schaltung verstanden werden, die zur Realisierung digitaler serieller Schnittstellen dient. Dabei kann es sich sowohl um ein eigenständiges elektronisches Bauelement wie einen UART-Chip bzw. -Baustein, oder um einen Funktionsblock eines höherintegrierten Bauteils wie einen Mikrocontroller handeln.

Gemäß einer weiteren Ausgestaltungsvariante der vorliegenden Erfindung ist es möglich, dass bei einer Arbeitsbeleuchtung die Kontrolleinheit eine vorgelagerte Lichtsteuereinheit als Master aufweist. Durch eine entsprechende Master-Slave Anordnung können Signale in der Arbeitsbeleuchtung besonders zuverlässig verschickt und empfangen werden.

Gemäß einem weiteren Aspekt kann ein Verfahren zur Lichteinstellung von wenigstens einem Leuchtmittel einer Arbeitsbeleuchtung einer Arbeitsmaschine mittels einer Kontrolleinheit und wenigstens einem Signalgeber zur Verfügung gestellt werden, wobei die Kontrolleinheit mit dem wenigstens einen Leuchtmittel sowie dem wenigstens einen Signalgeber durch Signalleitungen in Signalverbindung steht. Die Lichteinstellung des wenigstens einen Leuchtmittels wird anhand einer Modulation einer Spannungsversorgung des wenigstens einen Leuchtmittels und/oder des wenigstens einen Signalgebers über die Signalleitungen durchgeführt.

Durch die Modulation der Spannungsversorgung können innerhalb der Arbeitsbeleuchtung Steuersignale bzw. Daten übertragen und/oder ausgetauscht werden, ohne auf weitere Signalleitungen wie beispielsweise die eines BUS-Systems angewiesen zu sein. Folglich ist dadurch eine smarte, selbstregelnde Lichtsteuerung ohne zusätzlichen Hardwareeinsatz möglich. Entsprechende Hardwarekosten können eingespart werden. Durch das Verfahren ist es auf besonders einfache Weise möglich, eine bestehende einfache Arbeitsbeleuchtung als smarte Arbeitsbeleuchtung zu betreiben, in welcher mit einem Kabelbaum eine Basis- und eine Vorzugsvariante bedient werden können.

Das Verfahren funktioniert mit einem oder mehreren Leuchtmitteln, wobei jedes Leuchtmittel mehre Leuchtelemente aufweisen kann. D.h., die Leuchtmittel können auch in Modulbauweise, beispielsweise in Form einer Leuchtmittelmatrix, ausgestaltet sein. Unter der Kontrolleinheit kann eine Steuer- und/oder Regelungseinheit verstanden werden. Die Kontrolleinheit kann vorliegend außerdem als ein Signalgeber verstanden werden.

Der wenigstens eine Signalgeber kann wenigstens ein Lichtsensor, wenigstens ein Lichtsteuergerät, wenigstens ein Fahrzeugsteuergerät, ein Eye-Tracking-System, oder eine beliebige andere ansteuerbare, steuerbare und/oder regelbare Komponente der Arbeitsbeleuchtung bzw. der Arbeitsmaschine sein. Durch die Modulation der Spannungsversorgung kann eine smarte Kommunikation zwischen diesen Komponenten innerhalb der Arbeitsbeleuchtung hergestellt werden. Als die in Rede stehenden Komponenten bzw. Teilnehmer können alle Sender und Empfänger von modulierten Daten verstanden werden.

Grundsätzlich können auch Nicht-Teilnehmer mit demselben Kabelbaum versorgt werden wie Teilnehmer. Teilnehmer und Nicht-Teilnehmer sollen möglichst keine große kapazitive Eigenlast aufweisen. Ist dies der Fall, kann die kapazitive Eigenlast durch Induktivität entkoppelt werden.

Die Modulation der Spannungsversorgung ermöglicht eine beliebige BUS-Topologie. Die Kabellängen zwischen den Teilnehmern können bei der Anwendung des vorliegenden Verfahrens zum Beispiel bis zu 100 m lang sein, wenn keine weiteren Lasten auf dem gleichen Ast des Netzwerks hängen.

Die Frequenz der Spannungsmodulation ist innerhalb von technischen Grenzen grundsätzlich frei wählbar. Die Teilnehmer bzw. die einzelnen Komponenten der Arbeitsbeleuchtung sind vorzugsweise in einem Master-Slave Modus, in welchem ein Teilnehmer der Master ist und die Kommunikation zu übergeordneten Netzwerken übernimmt, wie beispielsweise eine CAN-Verbindung zu einem Fahrzeugbus.

Die Modulation der Spannungsversorgung kann gemäß einer Powerline-Communication (PLC) durchgeführt werden. Die Kontrolleinheit kann zur Modulation der Spannungsversorgung eine Fahrzeugsteuereinheit (VCU) und/oder eine Lichtsteuereinheit (LCU) aufweisen. Unter Verwendung einer eigenständigen Lichtsteuereinheit kann das Verfahren besonders performant durchgeführt werden.

Von Vorteil kann es sein, wenn ein Master-Slave-Netzwerk über eine physische Kollisionskontrolle bzw. über ein entsprechendes Kontrollverfahren verfügt. Bei einem solchen System bzw. Verfahren müssen sich alle Teilnehmer des Netzwerks bzw. in einem Netzwerk der Arbeitsbeleuchtung bei einer Initialisierung der Arbeitsbeleuchtung anmelden. Diese Anmeldung kann im Rahmen eines mehrstufigen Lotterieverfahrens durchgeführt werden. So kann sichergestellt werden, dass keine Virtuelle IP-Adresse mehrmals vergeben wird.

Abhängig von einer gewünschten Reaktionszeit, einer Taktfrequenz und/oder einem Datenaufkommen bezüglich der Arbeitsbeleuchtung, können unterschiedlich viele Teilnehmer durch die modulierte Spannung versorgt werden. Bei einem Netzwerk mit den verschiedenen Teilnehmern können unterschiedliche Frequenzen über einen oder mehrere Kanäle pro Leitung erzeugt werden. Hierbei ist es von Vorteil, wenn jeder Kanal eine eigene Hardwareschnittstelle aufweist.

Bei einer Weiterbildung ist es möglich, dass bei einem Verfahren die Modulation der Spannungsversorgung in einem Bereich von ± 0,6 V bis 1 V durchgeführt wird. Bei dieser Spannung konnten bei Versuchen die besten Ergebnisse erzielt werden. Zudem ist es möglich, dass die Modulation bei einem wie vorstehend beschriebenen Verfahren bitweise durchgeführt wird. Durch die bitweise Übertragung an einer Hardware-Schnittstelle können Busprotokolle frei gewählt werden.

Weiterhin hat es sich als vorteilhaft herausgestellt, wenn bei einem Verfahren die Kontrolleinheit in einem Subnetz der Arbeitsbeleuchtung angeordnet ist. Dies führt zu einer effizienten Betriebsweise der Arbeitsbeleuchtung. Hierbei ist die Kontrolleinheit, insbesondere in Form einer separaten Lichtsteuereinheit, der Ausgangspunkt des Subnetzes. Das Subnetz umfasst bei einer erfindungsgemäßen Arbeitsbeleuchtung vorzugsweise alle für eine Straßenfahrt nicht zugelassenen Lichtfunktionen, welche miteinander Daten austauschen. Das Subnetz für Lichtsteuerung über die Modulation der Spannungsversorgung ermöglicht eine unabhängige smarte Lichtsteuerung, die auf einfache und zuverlässige Weise eine sich selbst regelnde Arbeitsbeleuchtung realisiert.

Gemäß einem weiteren Aspekt der vorliegenden Erfindung wird eine Arbeitsmaschine mit einer wie vorstehend im Detail beschriebenen Arbeitsbeleuchtung bereitgestellt. Die Arbeitsmaschine weist eine Kabine für den Nutzer der Arbeitsbeleuchtung auf. Damit bringt auch eine erfindungsgemäße Arbeitsmaschine die vorstehend dargestellten Vorteile mit sich. Die Arbeitsmaschine ist vorzugsweise als mobile Arbeitsmaschine, insbesondere als eine Landwirtschaftsmaschine wie ein Traktor, ein Mähdrescher, ein Harvester, oder dergleichen ausgestaltet. Unter der Kabine ist eine Fahrer- bzw. Nutzerkabine zu verstehen, in welcher sich der Nutzer oder Fahrer der Arbeitsmaschine befindet, während er die Arbeitsmaschine bedient. Die Kabine kann eine offene oder eine geschlossene bzw. verschließbare Kabine sein. Grundsätzlich ist unter der Kabine ein abgegrenzter oder vordefinierter Ort oder ein entsprechender Raum zu verstehen, an welchem sich eine Person während der Nutzung der Arbeitsmaschine an oder in derselben aufhält.

Bei einer erfindungsgemäßen Arbeitsmaschine sowie einer dafür vorgeschlagenen Arbeitsbeleuchtung kann das wenigstens eine Leuchtmittel zum Erzeugen von Arbeitslicht mit wenigstens 2.000 Lumen ausgestaltet sein. D.h., das Leuchtmittel ist in der Lage, Arbeitslicht mit einem Lichtstrom von wenigstens 2.000 Lumen zu erzeugen. Weiterhin ist es möglich, dass bei einer erfindungsgemäßen Arbeitsmaschine bzw. einer Arbeitsbeleuchtung mehrere Leuchtmittel zum Erzeugen von Arbeitslicht mit jeweils wenigstens 2.000 Lumen angeordnet sind. Das Arbeitslicht der Arbeitsmaschine kann dadurch auf beispielsweise 4.000 Lumen, 6.000 Lumen oder auch über 10.000 Lumen erhöht werden. Ein solcher Lichtstrom kann bei gattungsgemäßen Arbeitsmaschinen insbesondere bei schwierigen Witterungs- und/oder Umgebungsverhältnissen darüber entscheiden, ob die Arbeit zufriedenstellen erledigt werden kann oder nicht.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind. Sämtliche aus den Ansprüchen, der Beschreibung oder der Zeichnung hervorgehende Merkmale und/oder Vorteile, einschließlich konstruktiver Einzelheiten und räumlicher Anordnungen können sowohl für sich als auch in den verschiedenen Kombinationen erfindungswesentlich sein.

Anhand der beigefügten Zeichnungen wird die Erfindung nachfolgend näher erläutert. Dabei zeigen:
- Fig. 1: eine Arbeitsmaschine mit einer Arbeitsbeleuchtung gemäß einer erfindungsgemäßen Ausführungsform,
- Fig. 2: eine erfindungsgemäße Arbeitsbeleuchtung, und
- Fig. 3: ein Flussdiagramm zum Erläutern eines Verfahrens.

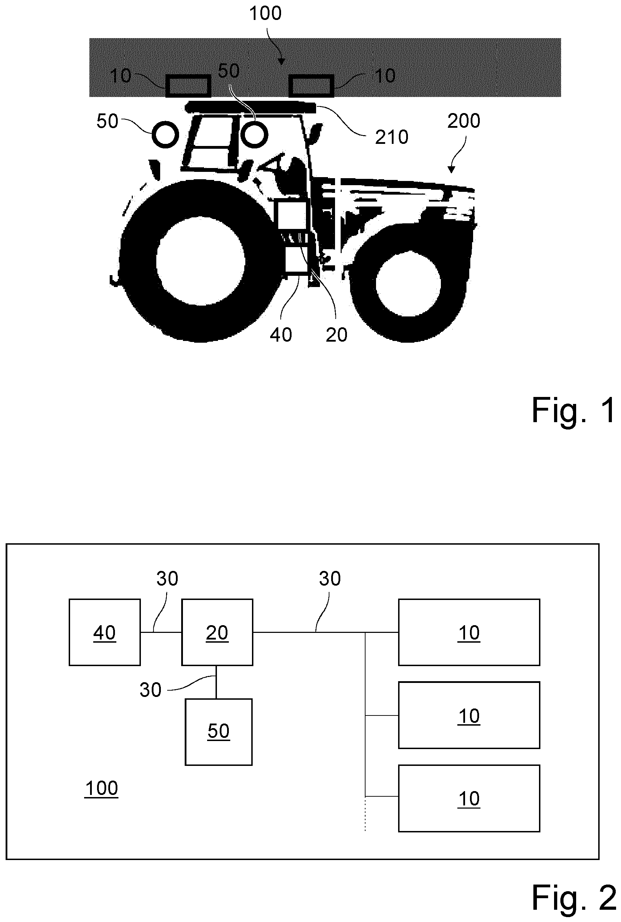

Elemente mit gleicher Funktion und Wirkungsweise sind in den Figuren 1 bis 3 jeweils mit denselben Bezugszeichen versehen.

Fig. 1 zeigt eine Arbeitsmaschine 200 in Form eines Traktors mit einer Arbeitsbeleuchtung 100. Die Arbeitsmaschine 200 weist eine Kabine 210 für einen Fahrer des Traktors auf.

Die in Fig. 1 dargestellte Arbeitsbeleuchtung 100 weist zwei Leuchtmittel 10 in Form von LED-Leuchtmitteln und zwei Signalgeber 50 in Form von Lichtsensoren bzw. Referenzlichtsensoren auf. Die Signalgeber 50 sind zum Erzeugen eines Steuersignals für die beiden Leuchtmittel 10 ausgestaltet. Die Arbeitsbeleuchtung 100 weist ferner eine Kontrolleinheit 20 in Form eines Lichtsteuergeräts auf, die mit den beiden Leuchtmitteln 10 sowie den beiden Signalgebern 50 durch Signalleitungen 30 in Signalverbindung steht. Die Kontrolleinheit 20 ist konfiguriert und ausgestaltet, die Lichteinstellung der Leuchtmittel 10 anhand einer Modulation einer Spannungsversorgung der Leuchtmittel 10 sowie der Signalgeber 50 über die Signalleitungen 30 durchzuführen.

Die Kontrolleinheit 20 weist als Schnittstelle für die beiden Leuchtmittel 10 sowie die beiden Signalgeber 50 eine UART-zu-PLC-Schaltung auf. Die Kontrolleinheit 20 weist ferner eine vorgelagerte Lichtsteuereinheit als Master auf. Außerdem ist die Kontrolleinheit 20 in einem Subnetz der Arbeitsbeleuchtung 100 angeordnet. Die dargestellte Arbeitsmaschine 200 bzw. die Arbeitsbeleuchtung 100 weist ferner ein Steuergerät 40 in Form eines Fahrzeugsteuergerätes auf.

In Fig. 2 ist eine Arbeitsbeleuchtung 100 separat zur Arbeitsmaschine 200 dargestellt. In Fig. 2 sind insbesondere die Signalleitungen 30 zu erkennen, die in Form von Strom- bzw. Spannungsleitungen ausgestaltet sind.

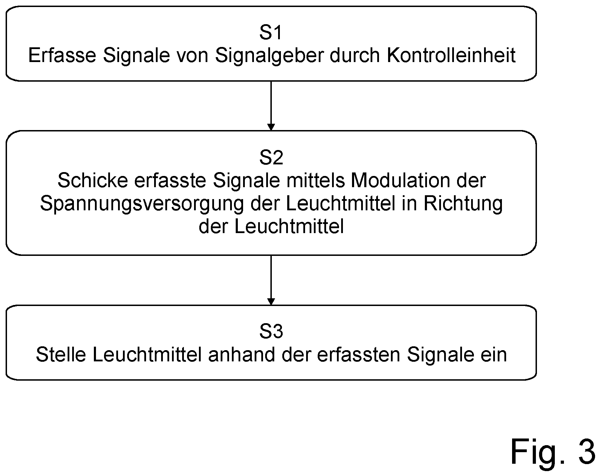

Mit Bezug auf Fig. 3 wird anschließend ein Verfahren zur Lichteinstellung der vorstehend beschriebenen Leuchtmittel 10 in der Arbeitsbeleuchtung 100 der Arbeitsmaschine 200 erläutert. Zum gewünschten Ansteuern der verschiedenen Leuchtmittel kann die Kontrolleinheit 20 basierend auf einer Signalinformation von dem Sensor 50 sowie einem entsprechenden Befehl von dem Steuergerät 40 durch Modulation der Spannungsversorgung an die Leuchtmittel 10 senden. Zwischen der Kontrolleinheit 20 und den Leuchtmitteln 10 sind hierfür Wandelmodule (nicht dargestellt) angeordnet, um die von der Kontrolleinheit 20 gesendeten Steuersignale in entsprechende modulierte Spannungssignale bzw. PLC-Signale, umzuwandeln und die PLC-Signale anschließend wieder in geeignete Steuersignale für die Leuchtmittel 10 umzuwandeln.

In einem ersten Schritt S1 werden Signale von wenigstens einem Signalgeber 50 der Arbeitsbeleuchtung 100 erfasst. Der Signalgeber 50 kann der Lichtsensor sein. Der Signalgeber könnte jedoch auch die Kontrolleinheit 20 selbst, das Steuergerät 40 oder eine andere Komponente der Arbeitsbeleuchtung sein, die zum Senden von elektrischen und/oder digitalen Signalen ausgestaltet ist.

In einem zweiten Schritt S2 werden die erfassten Signale anhand einer Modulation einer Spannungsversorgung der Leuchtmittel 10 und/oder des wenigstens einen Signalgebers 50 über die Signalleitungen 30 in Richtung der Leuchtmittel 10 geschickt. Die Modulation der Spannungsversorgung wird in einem Bereich von ± 0,6 V bis 1 V bitweise durchgeführt.

In einem anschließenden dritten Schritt S3 werden die Leuchtmittel 10 anhand der erfassten Signale eingestellt. Hierfür kann ein Decoder zum Senden und Empfangen der erfassten Signale verwendet werden. Entscheidend ist hierbei die smarte Signal- bzw. Datenkommunikation zwischen den verschiedenen Komponenten der Arbeitsbeleuchtung 100 mittels der Modulation der Spannungsversorgung, insbesondere in Form eines PLC-Lichtnetzwerkes, zur entsprechend intelligenten Einstellung der Leuchtmittel 10. Hierbei können Signale mittels der Modulation der Spannungsversorgung zunächst auch zwischen verschiedenen Signalgebern und/oder -empfängern verschickt werden, also bevor sie endgültig die Leuchtmittel 10 oder wenigstens eines der Leuchtmittel 10 erreichen.

Die Erfindung lässt neben den dargestellten Ausführungsformen weitere Gestaltungsgrundsätze zu. D.h., die Erfindung soll nicht auf die in den Figuren dargestellten Ausführungsformen beschränkt betrachtet werden.

### Bezugszeichenliste

- 10: Leuchtmittel
- 20: Kontrolleinheit
- 30: Signalleitung
- 40: Steuergerät
- 50: Signalgeber
- 100: Arbeitsbeleuchtung
- 200: Arbeitsmaschine
- 210: Kabine

## Patentansprüche

1. Arbeitsbeleuchtung (100) für eine Arbeitsmaschine (200), mit wenigstens einem Leuchtmittel (10), wenigstens einem Signalgeber (50) für das wenigstens eine Leuchtmittel (10), und einer Kontrolleinheit (20), die mit dem wenigstens einen Leuchtmittel (10) sowie dem wenigstens einen Signalgeber (50) durch Signalleitungen (30) in Signalverbindung steht,
wobei die Kontrolleinheit (20) konfiguriert und ausgestaltet ist, die Lichteinstellung des wenigstens einen Leuchtmittels (10) anhand einer Modulation einer Spannungsversorgung des wenigstens einen Leuchtmittels (10) und/oder einer Spannungsversorgung des wenigstens einen Signalgebers (50) über die Signalleitungen (30) in Richtung des wenigstens einen Leuchtmittels durchzuführen, **dadurch gekennzeichnet, dass** die Kontrolleinheit (20) als Schnittstelle für die Signalleitungen für das wenigstens eine Leuchtmittel (10) sowie den wenigstens einen Signalgeber (50) eine UART-zu-PLC-Schaltung aufweist.

2. Arbeitsbeleuchtung (100) nach Anspruch 1,
**dadurch gekennzeichnet, dass**
die Kontrolleinheit (20) eine vorgelagerte Lichtsteuereinheit als Master aufweist.

3. Arbeitsbeleuchtung (100) nach einem der voranstehenden Ansprüche,
**dadurch gekennzeichnet, dass**
die Kontrolleinheit (20) in einem Subnetz der Arbeitsbeleuchtung (100) angeordnet ist.

4. Arbeitsmaschine (200) mit einer Arbeitsbeleuchtung (100) nach einem der voranstehenden Ansprüche, aufweisend eine Kabine (210) für den Nutzer der Arbeitsbeleuchtung (100).

## Claims

1. Work lighting (100) for a work machine (200), with at least one illuminant (10), at least one signal transmitter (50) for the at least one illuminant (10), and a control unit (20) which is in signal connection with the at least one illuminant (10) and the at least one signal transmitter (50) by means of signal lines (30),
**wherein**
the control unit (20) is configured and designed to perform the light adjustment of the at least one illuminant (10) by means of a modulation of a voltage supply of the at least one illuminant (10) and/or a voltage supply of the at least one signal transmitter (50) via the signal lines (30) in the direction of the at least one illuminant, **characterized in that** the control unit (20) has a UART to PLC circuit as an interface for the signal lines for the at least one illuminant (10) and the at least one signal generator (50).

2. Work lighting (100) according to claim 1,
**characterized in that**
the control unit (20) has an upstream light control unit as master.

3. Work lighting (100) according to one of the preceding claims,
**characterized in that**
the control unit (20) is arranged in a subnetwork of the work lighting (100).

4. Work machine (200) with a work lighting (100) according to one of the preceding claims, comprising a cabin (210) for the user of the work lighting (100).

## Revendications

1. Éclairage de travail (100) pour une machine de travail (200), avec au moins un illuminant (10), au moins un émetteur de signal (50) pour l'au moins un illuminant (10), et une unité de contrôle (20) qui est en liaison de signalisation avec l'au moins un illuminant (10) et l'au moins un émetteur de signal (50) au moyen de lignes de signalisation (30),
où
l'unité de contrôle (20) est configurée et conçue pour effectuer le réglage de la lumière du au moins un illuminant (10) au moyen d'une modulation d'une alimentation en tension du au moins un illuminant (10) et/où d'une alimentation en tension du au moins un émetteur de signal (50) par les lignes de signalisation (30) en direction du au moins un illuminant, **caractérisé en ce que** l'unité de contrôle (20) comprend un circuit UART vers PLC comme interface pour les lignes de signalisation pour le au moins un illuminant (10) et l'au moins un émetteur de signal (50).

2. Éclairage de travail (100) selon la revendication 1,
**caractérisé en ce que**
l'unité de contrôle (20) a comme maître une unité de contrôle de la lumière en amont.

3. Éclairage de travail (100) selon l'une des revendications précédentes,
**caractérisé en ce que**
l'unité de contrôle (20) est disposée dans un sous-réseau de l'éclairage de travail (100).

4. Machine de travail (200) avec un éclairage de travail (100) conforme à l'une des revendications précédentes, comprenant une cabine (210) pour l'utilisateur de l'éclairage de travail (100).
